(19) Europäisches Patentamt
European Patent Office
Office européen des brevets

(11) Veröffentlichungsnummer: **0 224 029**
**B1**

# (12) EUROPÄISCHE PATENTSCHRIFT

(45) Veröffentlichungstag der Patentschrift: **13.09.89**

(51) Int. Cl.⁴: **C08F 210/02**
// (C08F210/02, 220:26)

(21) Anmeldenummer: **86114622.3**

(22) Anmeldetag: **22.10.86**

(54) **Copolymerisate des Ethylens mit Polyalkylenglykol(meth)acrylsäureestern.**

(30) Priorität: **07.11.85 DE 3539469**

(43) Veröffentlichungstag der Anmeldung: **03.06.87 Patentblatt 87/23**

(45) Bekanntmachung des Hinweises auf die Patenterteilung: **13.09.89 Patentblatt 89/37**

(84) Benannte Vertragsstaaten: **AT BE DE FR GB NL**

(56) Entgegenhaltungen:
**EP-A- 0 003 235**
**EP-A- 0 011 806**
**EP-A- 0 052 730**
**DE-A- 3 226 252**

(73) Patentinhaber: **BASF Aktiengesellschaft, Carl-Bosch-Strasse 38, D-6700 Ludwigshafen(DE)**

(72) Erfinder: **Ziegler, Walter, Dr., Starenweg 15, D-6803 Edingen-Neckarhausen(DE)**
Erfinder: **Koch, Horst, Dr., Schliffgasse 22, D-6711 Grosskarlbach(DE)**

**EP 0 224 029 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Copolymerisate des Ethylens, bestehend aus:

a) 30 bis 80 Gew.-Teilen Ethylen,
b) 2 bis 40 Gew.-Teilen (Meth)acrylsäureester,
c) 0 bis 40 Gew.-Teilen einer α,β-ethylenisch ungesättigten Carbonsäure, eines Carbonsäureanhydrids oder eines Carbonsäureamids und
d) gegebenenfalls mindestens einem weiteren mit Ethylen copolymerisierbaren, von (b) und (c) unterschiedlichen olefinisch ungesättigten Comonomeren.

Bei derartigen Copolymerisationsprodukten des Ethylens handelt es sich um hochmolekulare Stoffe, deren Eigenschaften im wesentlichen durch den Comonomergehalt bestimmt sind, und die sich als Schmelzkleber, Haftvermittler, Antidröhnmassen, als Zusatz zu Thermoplasten, Synthesekautschuken, Bitumen, Klebe- und Lacksysteme und als Dämpfungsmassen für mechanische Stöße eignen.

Es ist bereits bekannt, Ethylen mit α,β-ethylenisch ungesättigten Carbonsäuren, Carbonsäureanhydriden oder Carbonsäureamiden, gegebenenfalls in Gegenwart mindestens eines weiteren, mit Ethylen copolymerisierbaren olefinisch ungesättigten Comonomeren zu den entsprechenden Ethylencopolymerisaten zu polymerisieren (vgl. z.B. EP-A1-98 488, 106 999 und 115 190 oder DE-A-23 41 462). Die Produkte weisen je nach Zusammensetzung sehr unterschiedliche Eigenschaften auf, beispielsweise können sie zur Herstellung von Ionomeren mit verbesserten Tieftemperatureigenschaften verwendet werden.

Der Erfindung lag die Aufgabe zugrunde, Ethylencopolymeriste zu schaffen, die Elastomereigenschaften haben, gegen Ozon stabil sind und gleichzeitig in wäßrigem Medium löslich bzw. quellbar sind.

Diese Aufgabe wurde erfindungsgemäß durch Ethylencopolymerisate gemäß Patentansprüchen 1 bis 6 gelöst.

Die erfindungsgemäßen Copolymerisate bestehen aus 30 bis 80, bevorzugt 40 bis 60 Gew.-Teilen einpolymerisiertem Ethylen, 2 bis 40, bevorzugt 20 bis 40 Gew.-Teilen eines (Meth)acrylsäureesters der allgemeinen Formel (I), 0 bis 40, bevorzugt 1 bis 40, insbesondere 8 bis 30 Gew.-Teilen einer α,β-ethylenisch ungesättigten Carbonsäure, eines ethylenisch ungesättigten Carbonsäureanhydrids oder eines ethylenisch ungesättigten Carbonsäure amids und gegebenenfalls mindestens eines weiteren mit Ethylen copolymerisierbaren anderen olefinisch ungesättigten Comonomeren als die oben bezeichneten Verbindungen, bevorzugt in Mengen von 10 bis 30, insbesondere 10 bis 25 Gew.-Teilen. Die erfindungsgemäßen Copolymerisate haben Schmelzindices von kleiner als 1000 g/10 min, vorzugsweise im Bereich von 10 bis 800 g/10 min, insbesondere zwischen 50 und 500 g/10 min, gemessen nach DIN 53 735 bei 190 °C und 2,16 kp Belastung. Die Ethylencopolymerisate sind kautschukelastisch und weisen Shore-Härten A nach DIN 53 505 von ≥ 20 auf. Sie sind in wäßrigen Medien löslich oder zumindest dispergierbar und gegen Einwirkung von Ozon weitgehend stabil.

Das im Copolymerisat enthaltende Monomer Ethylen (a) ist als Copolymerisatbestandteil so bekannt, daß sich eine weitere Erläuterung erübrigt (vgl. auch "Encyclopedia of Polymer and Technology", Vol. 6, Ethylen Polymers-Polar Copolymers, Seiten 387 bis 431, John Wiley & Sons [1967]).

Die (Meth)acrylsäureesterkomponente (b) im Ethylencopolymerisat weist die allgemeine Formel (I) auf:

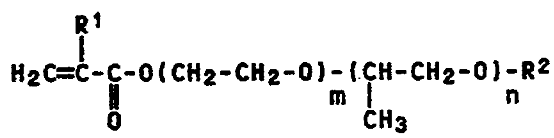 I

worin $R^1$ = H oder $CH_3$, $R^2$ = ein Alkyl-, Cycloalkyl- oder Arylrest, m ≥ 0, n ≥ 0 mit der Maßgabe, daß die Summe aus m + n stets größer als 2 ist. Bevorzugt ist m = 2 bis 100, besonders bevorzugt 2 bis 50, insbesondere 11. Bevorzugt ist n = 0 bis 100, besonders bevorzugt 0 bis 50. Besonders geeignet sind ω-Alkyl, -Cycloalkyl- oder -Aryl-poly-(alkylenoxid)-α-yl-(meth)-acrylate der allgemeinen Formel I, in denen $R^2$ = $CH_3$, $C_2H_5$, $C_3H_7$, $C_4H_9$, $C_{16}H_{33}$, $C_6H_{11}$ oder $C_6H_5$. Ganz besonders bevorzugt wird ein ω-Methyl-poly-(ethylenoxid)-α-yl-acrylat der folgenden Zusammensetzung (II) verwendet:

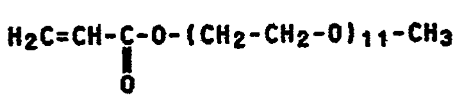 II

Die Poly(alkylenglykol)acrylate bzw. -methacrylate sind an sich als Comonomerbestandteile, insbesondere mit Acrylsäure und/oder Acrylsäurealkylestern, bekannt (vgl. EP-A2-114 340, DE-A-23 30 328, EP-A1-43 319, US-A-37 19 647, GB-A-1 423 633 oder DE-A-24 54 946). Die ungesättigten Poly(ethylenglykol)acrylate können z.B. durch Umsetzen der entsprechenden Acylchloride mit Polyethylenglykol hergestellt werden (vgl. DD-A-129 778).

Unter α,β-ethylenisch ungesättigten Carbonsäuren, Carbonsäureanhydriden oder Carbonsäureamiden, die im Ethylencopolymerisat gegebenenfalls als Komponente (c) enthalten sein können, werden insbesondere die Derivate von ungesättigten Carbonsäuren oder diese selbst mit bevorzugt 3 bis 8 Kohlenstoffatomen verstanden. Gemeint sind die üblichen, mit Ethylen copolymerisierbaren Carbonsäuren wie Acrylsäure, Methacrylsäure, Itaconsäure, Maleinsäure oder Fumarsäure, Acrylsäureamid, Methacrylsäureamid, Maleinsäureanhydrid und auch Methylhydrogenmaleinat. Die Carbonsäure kann auch durch Comonomere (c) entstehen, die während oder nach der Copolymerisation durch Hydrolyse und/oder Pyrolyse umgesetzt werden, z.B. durch einpolymerisiertes tert.-Butylacrylat. Ethylencopolymerisate, die α,β-ethylenisch ungesättigte Carbonsäure, Carbonsäureanhydrid oder Carbonsäureamid einpolymerisiert enthalten, sind aus der Literatur wohlbekannt (vgl. z.B. DE-A-28 02 866, 27 17 411, US-A-3 997 455, 35 01 540, DE-A-26 23 006, US-A-3 827 997 oder DE-A-25 24 274).

Die Copolymerisate können gegebenenfalls noch mindestens ein weiteres mit Ethylen copolymerisierbares, von den oben erwähnten Monomeren unterschiedliches olefinisch ungesättigtes Comonomeres (d) einpolymerisiert enthalten. Als Comonomere (d) kommen insbesondere in Betracht: Vinylester der allgemeinen Formel

$$CH_2=CH-O-\overset{\overset{O}{\|}}{C}-R^3$$

worin $R^3$ = eine $C_1$- bis $C_{10}$-Alkylgruppe; Vinylether der allgemeinen Struktur $CH_2=CH-OR^3$, worin $R^3$ = eine $C_1$- bis $C_{10}$-Alkylgruppe; (Meth)acrylester der allgemeine Struktur

$$CH_2=C(R^1)-\overset{\overset{O}{\|}}{C}-O-R^3$$

worin $R^1$ = H oder $CH_3$ und $R^3$ = $C_1$- bis $C_{10}$-Alkyl und andere Monomere. Besonders geeignete Comonomere (d) sind Vinylacetat, Vinylpropionat, Vinylbutyrat, Valeriansäurevinylester, Hexancarbonsäurevinylester, Vinylethylether, Vinyl-1-propylether, Vinyl-2-propylether, Vinyl-1-butylether, Vinyl-2-butylether, Vinyl-1-pentylether, Methylacrylat, Ethylacrylat, Ethylmethacrylat, Propylacrylat, Propylmethacrylat, n-Butylacrylat, n-Butylmethacrylat, n-Pentylacrylat, n-Pentylmethacrylat, n-Hexylacrylat, n-Hexylmethacrylat, t-Butylacrylat, Cyclohexylacrylat, Cyclohexylmethacrylat, 2-Ethylhexylacrylat, 2-Ethylhexylmethacrylat. Andere mit Ethylen copolymerisierbare Monomere (d), die als Homopolymerisate niedrige Glastemperaturen aufweisen und zu den Klassen der Vinylester, Vinylether oder (Meth)acrylsäureester gehören, sind ebenfalls als elastifizierende Kompo nenten geeignet. Sie können aus dem Kapitel "The Glass Transition Temperature of Polymers" des Polymer Handbook, Second Edition, J. Brandrup u. E.H. Immergut, etc., J. Wiley and Sons, New York, 1975, entnommen werden.

Besonders geeignete Comonomere (d) sind Vinylacetat, n-Butylacrylat, 2-Ethylhexylacrylat und Vinyl-1-butylether. Die Copolymerisation dieser Comonomeren mit Ethylen und gegebenenfalls mit Acrylsäure ist Stand der Technik (vgl. z.B. DE-A-28 02 866, GB-A-1 148 148, US-A-4 157 428 oder EP-A-12 368).

Bevorzugte Copolymerisate sind Terpolymerisate, die neben Ethylen und dem (Meth)acrylsäureester der allgemeinen Formel (I) die Comonomerkomponente (c) aus α,β-ethylenisch ungesättigter Carbonsäure, ungesättigtem Carbonsäureanhydrid oder -amid im beanspruchten Bereich einpolymerisiert enthalten, wobei insbesondere Acrylsäure und Methacrylsäure als Komponente (c) besonders bevorzugt ist. Ein besonders bevorzugtes Ethylencopolymerisat ist ein Terpolymerisat aus Ethylen, (Meth)acrylsäureester (II) und Acrylsäure bzw. Methacrylsäure im beanspruchten Bereich, insbesondere mit 8 bis 30 Gew.-Teilen einpolmerisierter Acrylsäure bzw. Methacrylsäure.

Die Herstellung der erfindungsgemäßen Ethylencopolymerisate kann nach herkömmlichen üblichen Hochdruckpolymerisationsverfahren erfolgen [vgl. Ullmanns Enzyklopädie der technischen Chemie, 4. Auflage, Band 19 (1980), Seiten 169 bis 175, Verlag Chemie GmbH, D-6940 Weinheim]. Die Copolymerisation des Ethylens erfolgt bei Drücken von 350 bis 5000 bar, vorzugsweise 1500 bis 3000 bar. Bei der Herstellung der erfindungsgemäßen Copolymerisate des Ethylens arbeitet man im besonderen bei Drücken von 2000 bis 3000 bar. Die Temperaturen im Polymerisationssystem liegen zwischen 50 und 450°C, vorzugsweise zwischen 150 und 350°C. Die Bedingungen im Polymerisationssystem lassen sich apparativ in sogenannten Rohrreaktoren oder Autoklaven einstellen. Unter Rohrreaktoren versteht man rohrförmige Polymerisationsgefäße, deren Längenausdehnung das über 2000fache, bevorzugt 5000- bis 50.000fache, des Rohrdurchmessers beträgt. Wie üblich, wird ein Teil der Polymerisationswärme durch Kühlung des Rohrreaktors mit Wasser von außen abgeführt. Autoklaven sind Druckgefäße mit einem Längen/Durchmesser-Verhältnis von 1 bis ca. 20. Besonders geeignet für die Herstellung der erfindungsgemäßen Copolymerisate des Ethylens sind Autoklavenreaktoren. Die Copolymerisation des Ethylens z.B. mit (Meth)acrylsäure und dem ω-Alkyl-, Cycloalkyl- oder Aryl-poly(alkylenoxid)-α-yl-(meth)acrylat (I) sowie gegebenenfalls den weiteren Comonomeren aus den Klassen der Vinylester, Vinylether und/oder (Meth)acrylsäureester er folgt in Gegenwart radikalischer Initiatoren. Unter radikalischen Polymerisationsinitiatoren sollen diejenigen Katalysatoren verstanden werden, die auch für die Homopolymerisation des Ethylens unter hohem Druck verwendet werden. Geeignet ist beispielsweise Sauerstoff, zweckmäßigerweise in Mengen von 10 bis 200 mol-ppm, bezogen auf das zu polymerisierende Ethylen. In Betracht kommen außerdem Peroxide und andere radikalbildende Verbindungen sowie Gemische von Peroxiden, die unterschiedliche Zerfallstemperaturen haben und Hydroperoxide, vor allem aber auch Mischungen aus Sauerstoff und Peroxiden und/oder Hydroperoxiden. Als Beispiele für Peroxide und Hydroperoxide seien genannt: Tert.-butylperpivalat, Di-tert.-butylperoxid, Tert.-butylhydroperoxid, Tert.-butylperbenzoat, Dilauroylperoxid und Tert.-butylperisononanoat. Unter radikalischen Polymerisationsinitiatoren sollen auch Verbindungen wie beispielsweise Azo-isobuttersäuredinitril verstanden werden. Man kann auch Mischungen aus Sauerstoff und einem oder mehreren Peroxiden verwenden. Besonders geeignet sind Peroxide, wie Di-tert.butylperoxid, Tert.-butylperpivalat und Tert.-butylperisononanoat.

Das Molekulargewicht des anfallenden Copolymerisats kann durch die üblichen Regler, z.B. Kohlenwasserstoffe wie Propan, Propen etc., Ketone wie Aceton, Methylethylketone etc. oder Aldehyde wie Propionaldehyd, auf den gewünschten Wert gebracht werden. Besonders eignet sich hierbei Propionaldehyd.

Die Copolymerisation wird im allgemeinen in Abwesenheit eines Lösungsmittels durchgeführt. Die geringen Mengen eines inerten Lösungsmittels, wie Benzol, Mineralöle oder andere inerte Lösungsmittel, in denen die Polymerisationsinitiatoren gelöst werden, können gegenüber den anderen Einsatzstoffen vernachlässigt werden. Wird mit Sauerstoff als Polymerisationsinitiator gearbeitet, kann jegliches Lösungsmittel entfallen.

Die mit der Erfindung erzielten Vorteile sind insbesondere darin zu sehen, daß mit den erfindungsgemäßen Ethylencopolymerisaten ein Polymerisat zur Verfügung gestellt wird, das Elastomereigenschaften aufweist, gegen Ozon stabil und gleichzeitig in wäßrigen Medien löslich bzw. quellbar ist.

## Beispiel 1

Eine Mischung von 12,5 kg/h Ethylen, 1,23 kg/h Acrylsäure, 1,29 kg/h ω-Methyl-poly(ethylenoxid)-α-yl-acrylat der Formel (II) und 0,016 kg/h Propionaldehyd wurden kontinuierlich durch einen auf einem Druck von 1800 bar gehaltenen 1-Liter-Rührautoklaven geleitet. Durch die kontinuierliche Zugabe von 31,7 g/h t-Butyl-perpivalat, gelöst in Isododecan, wurde eine Temperatur im Autoklaven von 210°C aufrechterhalten. Nach Entspannung des Reaktionsgemisches fielen 3,6 kg/h eines Ethylen-Acrylsäure-ω-Methylpoly(ethylenoxid)-α-yl-acrylat-Terpolymeren mit einem Acrylsäuregehalt von 17,6 Gew.% und einem Gehalt an ω-Methylpoly(ethylenoxid)-α-yl-acrylat von 25 Gew.% an. Der Schmelzindex, gemessen bei 190°C und einer Belastung von 2,16 kp betrug 250 g/10 Minuten.

## Beispiel 2

Eine Mischung von 200 kg/h Ethylen, 8,4 kg/h Acrylsäure, 5,7 kg/h ω-Methyl-poly(ethylenoxid)-α-yl-acrylat der Formel (II) und 9,4 kg/h n-Butylacrylat mit einer Temperatur von 88°C wurde kontinuierlich durch einen bei einem Druck von 2300 bar gehaltenen 10-Liter-Rührautoklaven (Länge-/Durchmesserverhältnis 13:1) geleitet. Die Dosierung des Reaktionsgemisches erfolgte in der Autoklavenmitte. Durch die kontinuierliche Zugabe von 87 g/h tert.-Butylperpivalat (gelöst in Isododecan) wurde die maximale Temperatur im Autoklaven bei 218°C gehalten. Das nach Entspannung des Reaktionsgemisches in einer Menge von 36 kg/h anfallende Polymerisat entsprach einem Umsatz von 19,0 Gew.% (bezogen auf den Ethylendurchsatz). Die Zusammensetzung des Polymerisates betrug 53,1 Gew.% Ethylen, 15,4 Gew.% Acrylsäure, 12 Gew.% ω-Methyl-poly(ethylenoxid)-α-yl-acrylat der Formel (II) und 19,5 Gew.% n-Butylacrylat. Es wies einen Schmelzindex von 150 g/10 Minuten (gemessen nach DIN 53 735 bei 190°C und 2,16 kp Belastung) auf.

**Tabelle 1**

| Bei-spiel Nr. | Druck (bar) | Tmax (°C) | Tmin (°C) | Ethylen-Durchsatz (kg/h) | Comonomer-Dosierung AS (kg/h) | Comonomer-Dosierung Verb.II (kg/h) | Comonomer-Dosierung EHA (kg/h) | Initiator TBPPI (g/h) | Regler PA (kg/h) | Ausstoß (kg/h) | Umsatz (%) | Comonomer-Gehalt AS (Gew.%) | Comonomer-Gehalt Verb.II (Gew.%) | Comonomer-Gehalt EHA (Gew.%) | MFI 190/2,16 (g/10') |
|---|---|---|---|---|---|---|---|---|---|---|---|---|---|---|---|
| 3 | 2300 | 218 | 90 | 217 | 8,7 | 3,7 | 8,1 | 47,8 | 0,15 | 36 | 16,6 | 15,7 | 7,5 | 17 | 85 |
| 4 | 2300 | 220 | 91 | 202 | 11,8 | 4,9 | 10,8 | 72,8 | 0,15 | 39 | 19,3 | 19,1 | 9 | 20 | 270 |

E = Ethylen

AS = Acrylsäure

Verb.II = $H_2C=CH-C(=O)-O-(CH_2-CH_2-O)_{11}-CH_3$

EHA = 2-Ethylhexylacrylat
TBPPI = t-Butyl-perpivalat
PA = Propionaldehyd
nBA = n-Butylacrylat

Tabelle 2

| Beispiel Nr. | Zusammensetzung E (Gew.-%) | AS (Gew.-%) | II (Gew.-%) | nBA (Gew.-%) | EHA (Gew.-%) | MFI 190/2,16 (g/10') | Shore-Härte A (DIN 53 505) | Glastemperatur (°C) (DSC) | Löslichkeit 0,5 Gew.-% NaOH 60°C |
|---|---|---|---|---|---|---|---|---|---|
| 1 | 57,4 | 17,6 | 25 | – | – | 250 | 35 | −42 | gelöst |
| 2 | 53,1 | 15,4 | 12 | 19,5 | – | 150 | 35 | −35 | gelöst |
| 3 | 59,8 | 15,7 | 7,5 | – | 17 | 85 | 58 | −28 | stark angequollen |
| 4 | 51,9 | 19,1 | 9 | – | 20 | 270 | 33 | −29 | gelöst |

**Patentansprüche**

1. Copolymerisate des Ethylens, bestehend aus:
a) 30 bis 80 Gew.-Teilen Ethylen,
b) 2 bis 40 Gew.-Teilen (Meth)acrylsäureester,
c) 0 bis 40 Gew.-Teilen einer α,β-ethylenisch ungesättigten Carbonsäure, eines Carbonsäureanhydrids oder eines Carbonsäureamids und
d) gegebenenfalls mindestens einem weiteren mit Ethylen copolymerisierbaren, von (b) und (c) unterschiedlichen olefinisch ungesättigten Comonomeren,
dadurch gekennzeichnet, daß der (Meth)acrylsäureester (b) ein ω-Alkyl-, -Cycloalkyl- oder -Arylpoly(alkylenoxid)-α-yl-(meth)acrylat der allgemeinen Formel (I):

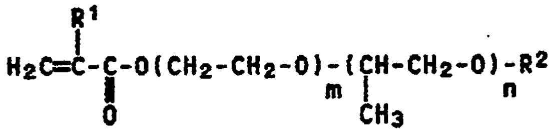

I

ist, wobei $R^1$ = H oder $CH_3$, $R^2$ = ein Alkyl-, Cycloalkyl- oder Arylrest, m = gleich oder größer als 0, n = gleich oder größer als 0, mit der Maßgabe, daß die Summe aus m + n stets gleich oder größer als 2 ist.

2. Copolymerisate nach Anspruch 1, dadurch gekennzeichnet, daß im (Meth)acrylsäureester der allgemeinen Formel (I) m = 2 bis 100 und n = 0 bis 100 ist.

3. Copolymerisate nach Anspruch 1, dadurch gekennzeichnet, daß im (Meth)acrylsäureester der allgemeinen Formel (I) m = 2 bis 50 und n = 0 bis 50 ist.

4. Copolymerisate nach Anspruch 1, dadurch gekennzeichnet, daß im (Meth)arylsäureester der allgemeinen Formel (I) $R^2$ = $CH_3$, $C_2H_5$, $C_3H_7$, $C_4H_9$, $C_{16}H_{33}$, $C_6H_{11}$ oder $C_6H_5$.

5. Terpolymerisate des Ethylens, bestehend aus 30 bis 80 Gew.-Teilen Ethylen, 2 bis 40 Gew.-Teilen des (Meth)acrylsäureesters der allgemeinen Formel (I) und 1 bis 40 Gew.-Teilen einer α,β-ethylenisch ungesättigten Carbonsäure, eines Carbonsäureanhydrids oder eines Carbonsäureamids.

6. Terpolymerisate des Ethylens nach Anspruch 5, dadurch gekennzeichnet, daß sie 8 bis 30 Gew.-Teilen Acrylsäure oder Methacrylsäure einpolymerisiert enthalten.

## Claims

1. A copolymer of ethylene, consisting of
a) from 30 to 80 parts by weight of ethylene,
b) from 2 to 40 parts by weight of a (meth)acrylate,
c) from 0 to 40 parts by weight of an α,β-ethylenically unsaturated carboxylic acid, a carboxylic anhydride or a carboxamide and
d) if required, one or more further olefinically unsaturated comonomers which are copolymerizable with ethylene and differ from (b) and (c),
wherein the (meth)acrylate (b) is an ω-alkyl-, -cycloalkyl- or aryl-poly-(alkylene oxide)-α-yl (meth)acrylate of the formula (I)

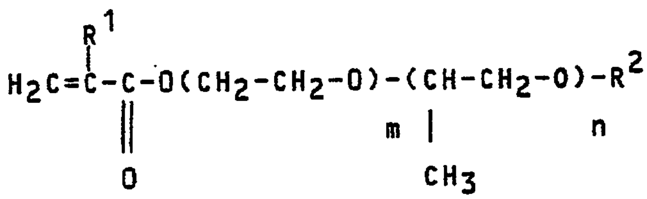

(I)

where $R^1$ is H or $CH_3$, $R^2$ is alkyl, cycloalkyl or aryl and m and n are each equal to or greater than 0, with the proviso that the sum of m and n is always equal to or greater than 2.

2. A copolymer as claimed in claim 1, wherein, in the (meth)acrylate of the formula (I), m is from 2 to 100 and n is from 0 to 100.

3. A copolymer as claimed in claim 1, wherein, in the (meth)acrylate of the formula (I), m is from 2 to 50 and n is from 0 to 50.

4. A copolymer as claimed in claim 1, wherein, in the (meth)acrylate of the formula (I), $R^2$ is $CH_3$, $C_2H_5$, $C_3H_7$, $C_4H_9$, $C_{16}$,$H_{33}$, $C_6H_{11}$ or $C_6H_5$.

5. A terpolymer of ethylene, consisting of from 30 to 80 parts by weight of ethylene, from 2 to 40 parts by weight of a (meth)acrylate of the formula (I) and from 1 to 40 parts by weight of an α,β-ethylenically unsaturated carboxylic acid, a carboxylic anhydride or a carboxamide.

6. A terpolymer of ethylene as claimed in claim 5, which contains from 8 to 30 parts by weight of acrylic acid or methacrylic acid as copolymerized units.

## Revendications

1. Copolymères d'éthylène, se composant de
a) 30 à 80 parties en poids d'éthylène
b) 2 à 40 parties en poids d'ester d'acide (méth)acrylique
c) 0 à 40 parties en poids d'un acide carboxylique, d'un anhydride carboxylique ou d'un carboxamide à insaturation α,β-éthylénique, et
d) éventuellement au moins un autre comonomère à insaturation éthylénique, différent de b) et c) et copolymérisable avec l'éthylène,
caractérisé en ce que l'ester d'acide (méth)acrylique b) est un (méth)acrylate de ω-alkyl-, ω-cycloal-

kyl- ou ω-arylpoly(oxyde d'alkylène)-α-yle de formule générale (I)

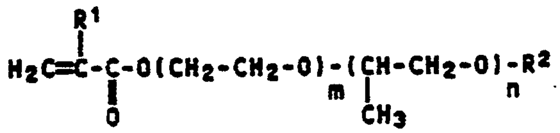 I

dans laquelle $R^1$ est H ou $CH_3$, $R^2$ est un reste alkyle, cycloalkyle ou aryle, $m \geq 0$, $n \geq 0$, à la condition que $m + n \geq 2$.

2. Copolymères selon la revendication 1, caractérisés en ce que, dans l'ester d'acide (méth)acrylique de formule générale (I), m est compris entre 2 et 100 et n entre 0 et 100.

3. Copolymères selon la revendication 1, caractérisés en ce que, dans l'ester d'acide (méth)acrylique de formule générale (I), m est compris entre 2 et 50 et n entre 0 et 50.

4. Copolymères selon la revendication 1, caractérisés en ce que, dans l'ester d'acide (méth)acrylique de formule générale (I), $R^2 = CH_3$, $C_2H_5$, $C_3H_7$, $C_4H_9$, $C_{16}H_{33}$, $C_6H_{11}$ ou $C_6H_5$.

5. Terpolymères d'éthylène, se composant de 30 à 80 parties en poids d'éthylène, de 2 à 40 parties en poids de l'ester d'acide (méth)acrylique de formule générale (I) et de 1 à 40 parties en poids d'un acide carboxylique, d'un anhydride carboxylique ou d'un carboxamide à insaturation α,β-éthylénique.

6. Terpolymères d'éthylène selon la revendication 5, caractérisés en ce qu'ils contiennent de 8 à 30 parties en poids d'acide acrylique ou méthacrylique en chaîne polymère.